# EUROPEAN PATENT APPLICATION

(11) **EP 0 879 563 A1**
(43) Date of publication of application: **25.11.1998**
(21) Application number: 98108563.2
(22) Date of filing: 12.05.1998
(51) Int. Cl.: A23L 1/304, A23L 1/172

(54) **Zinc enriched foods**

(30) Priority: 23.05.1997 JP 133797/97; 02.07.1997 JP 177271/97
(71) Applicant: Nisshin Flour Milling Co., Ltd., Chiyoda-ku, Tokyo 101-8441 (JP)
(72) Inventor: Suzuki, Yoshio, c/o Nisshin Flour Milling Co. Ltd., Ohimachi, Iruma-gun, Saitama-ken (JP); Minemura, Tsuyoshi, Nisshin Flour Milling Co. Ltd., Ohimachi, Iruma-gun, Saitama-ken (JP); Motoi, Hirofumi, c/o Nisshin Flour Milling Co.Ltd., Ohimachi, Iruma-gun, Saitama-ken (JP)
(74) Representative: Türk, Gille, Hrabal

(57) **Abstract**

Foods or food materials which comprise as a mineral enriching component a fraction containing a zinc rich mineral component which is fractionated from an extract of a cereal germ. If desired, zinc in the fraction is made water-soluble under a neutral to alkaline condition, with citric acid added in 10 or more moles per mole of zinc.

## Description

### FIELD OF THE INVENTION

This invention relates to mineral enriched foods, and more particularly, to foods which comprises as a mineral enriching component a fraction fractionated from an extract of a cereal germ and containing a high content of a mineral component, typically, zinc, manganese or other trace elements. The invention also relates to foods or food materials which comprise as a mineral enriching component a fraction fractionated from an extract of a cereal germ, zinc of which is made water-soluble under a neutral to alkaline condition, with the specific amount of citric acid added.

### BACKGROUND OF THE INVENTION

The recent development of study in the field of nutritional physiology has elucidated what roles the mineral components, i.e. the trace elements in foods play in a living body. It has been clarified, for example, that the deficiency of zinc may induce the destruction of a part of the sense organs on the tongue called "taste buds" to cause dysgeusia. This is known to be the most poular cause of dysgeusia among others such as diseases of the tongue or kidney or side effects of drugs.

It has also been known that zinc is rich in highly metabolizing sites of a living body such as bones, skin, hairs, genital organs and the like and that it is an essential component for the growth of animals. Moreover, it has been known that the deficiency of zinc may cause lowering of the immunizing function and that zinc poor meals for infants induce the growth disorder, dysgeusia or dermatitis and others in infants.

Another mineal component, manganese, is an essential element for the component of metalloenzymes such as arginase, pyruvic acid carboxylase or manganese superoxide dismutase (MnSOD). It has been clarified that temporal deficiency of manganese may induce dermatitis (crystal miliaria), while prolonged one may adversely affect the bone reconstruction. Generally, one can take a necessary amount of manganese from ordinary meals. However, those under dietary cure wherein the sort of foods are restricted will be faced with the serious problem to ensure the required amount thereof.

As discussed above, zinc, manganese or other mineral components in foods may play a physiologically important role. As a matter of fact, however, the Japanese people take foods which are not necessarily rich in these mineral components. Further, it is a serious problem for patients before or after surgical operation to take these mineral components. When it is not feasible to give ordinary meals to those patients orally, there have been used a wide variety of liquid foods as a dietary supplement.

Commercially available enteral nutritions in Japan may be roughly divided into two classes of medicines and foods. In the latter class of foods, it is contemplated to blend the mineral component in the form of food additives, and zinc gluconate and zinc sulfate as food additives have been approved in food industry for use in modified milk powder for infants. However, it has not been approved to add the trace elements essential for regulating physiological functions such as zinc or manganese to other foods than said milk powder.

The RDI (Reference Daily Intake) announced by the FDA (USA) in 1995 has been considered to be the latest standard for a daily amount of the mineral component generally recommendable for adults. In accordance with this standard, the standards of a daily intake for zinc and manganese are prescribed to be 15 mg and 2 mg, respectively. The standard value for zinc comes from the assumption that the minimum requirement for adults is 2.5 mg, an average absorption of zinc is 20%, and a safety factor to unevenness of population is 20%, that is, the numerical value of 15 mg was calculated according to the equation: 2.5 ÷ 20(%) x 120(%) = 15 mg.

However, since the mineral components have not been approved in Japan as food additives to be added to enteral nutritions, the conventional enteral nutritions contain zinc or manganese at a low level, average content of zinc being at 2 - 4 mg/2,000 kcal and manganese at 0.1 - 0.8 mg/2,000 kcal.

Under these circumstances, attention has been drawn to an oyster, a nutritious food material containing trace elements such as zinc, which may be used as one of the materials for the enteral nutritions. An enteral nutrition prepared by using oyster extract has been suggested in JP-A-8-298968. However, the oyster extract, due to a low zinc content and a strong odor peculiar to the oyster extract, can not be used in a large amount, and moreover it requires masking with something such as soybean protein. In addition, the oyster extract and soybean protein are relatively expensive food materials and then the enteral nutrition thus prepared would present the problem of a higher cost of materials.

There have been recently marketed with a great popularity soft drinks containing various vitamins and minerals such as calcium, but there have not been put into market in Japan those having a higher content of trace elements such as zinc or manganese, which are still unapproved as food additives.

The germs of cereals such as wheat, rice, barley, corn, milo, soybean, sunflower and the like contain abundantly nutritious substances such as vitamins and minerals including trace elements such as zinc or manganese at a high level, and they are known to be excellent food materials. Thus, attempts have been made to decompose the germs with an enzyme or the like to recover a water-soluble fraction, thereby making them usable in beverages or nutritions (JP-B-55-1027, JP-A-48-1170 and JP-B-3-58703). However, these prior art techniques have not been based upon the idea to fractionate and utilize the fraction having a high content of zinc or manganese.

Under these circumstances, we have established a process for the preparation of a zinc rich mineral component from a cereal germ which comprises the steps of extracting the cereal germ with water at a temperature of 70°C or lower under an acidic condition of pH 5.0 or lower, and adjusting the resulting extract solution to pH 6.0 or higher or controlling a temperature range of the resulting extract solution to 70 - 100°C to recover the zinc rich mineral component as insolubles, which was filed on February 14, 1997 as our copending Japanese Patent Application No. 30078/1997.

Accordingly, it has been desired to develop foods comprising a zinc rich mineral component essential for regulating human physiological functions and derived from plant components without any restricted use as food additives, which have a satisfactory stability and a favorable palatability for its pleasant aromatic odor.

On the other hand, an absorption rate of mineral components in foods may greatly be varied depending upon other food components taken together. As a matter of fact, an ingested amount is not always be reflected directly on an absorbed amount. It has been known that the ingested foods are digested in the stomach under an acidic condition of pH 2 - 3 with gastric acid and the digested and absorbed in the intestines under a neutral to weakly alkaline condition by mixing with a viscous intestinal juice of pH around 8.2 - 9.3. In this connection, it has been elucidated that solubility of mineral components shall play an important role in the absorption thereof.

From this point of view, the relationship between the mineral components in foods and the pH range has been studied in this field. For instance, zinc contained in the three proteins of casein, soybean protein and yeast protein has been investigated and zinc has been found to show a greatly lowered solubility at pH 5.5 as compared with that at pH 2.0 even in the presence of any of a mixture of calcium-citric acid-maleic acid, phytic acid and calcium carbonate (Gifford, S.R. & Clydesdale, F.M., J. Food Sci., 55, 1720-1724 (1990)).

Sometimes, it is desirable to maintain the pH of a food at around neutrality. For example, where a liquid enteral nutrition is to be prepared using casein as a protein source, casein will be coagulated in an acidic range of pH 6.5 or lower, but a germ extract is not completely dissolved in the pH range in which casein is not coagulated, so that it could not be uniformly dispersed in casein.

Thus, it has been required to develop a technique of solubilizing zinc present in the mineral components fractionated from an extract of a cereal germ.

### SUMMARY OF THE INVENTION

The present invention provides a food which comprises as a mineral enriching component a fraction containing a zinc rich mineral component which is fractionated from an extract of a cereal germ.

The invention also provides a food or food material comprising as a mineral enriching component a fraction containing a zinc rich mineral component which is fractionated from an extract of a cereal germ, wherein zinc in the fraction is made water-soluble under a neutral to alkaline condition, with citric acid added in 10 or more moles per mole of zinc.

### BRIEF DESCRIPTION OF THE DRAWINGS

Fig. 1 graphically shows a dissolved behavior of zinc when an amount of citric acid was increased at a zinc concentration of 15 ppm and at pH 8 of the solution.

Fig. 2 graphically shows a dissolved behavior of zinc in a solution with a citric acid concentration of 52 mM and a zinc concentration of 15 ppm when the pH of the solution was changed from 7.00 to 8.40.

Fig. 3 graphically shows a dissolved behavior of zinc when an amount of lactic acid was increased at a zinc concentration of 15 ppm and at pH 8 of the solution.

Fig. 4 graphically shows a dissolved behavior of zinc in a solution when an amount of lactic acid was increased to 0 - 50 mM at a zinc concentration of 6 ppm and at pH 9 of the solution.

Fig. 5 graphically shows a dissolved behavior of zinc in a solution when an amount of citric acid was increased to 0 - 50 mM at a zinc concentration of 6 ppm and at pH 9 of the solution.

Fig. 6 graphically shows a dissolved behavior of zinc in a solution when pH was adjusted to 3 - 11.5 at a zinc concentration of 6 ppm and a citric acid concentration of 5.2 mM.

### DETAILED DESCRIPTION OF THE INVENTION

The fraction containing a zinc rich mineral component which can be used in this invention can be fractionated from an extract of a cereal germ by the process mentioned in our copending Japanese Patent Application No. 30078/1997 filed on February 14, 1997, more specifically, by the process which comprises the steps of:
extracting a cereal germ with water at a temperature of 70°C or lower under an acidic condition of pH 5.0 or lower; and
adjusting the pH of the resulting extract to 6.0 or higher or heating the resulting extract to a temperature of 70 to 100°C to precipitate and recover said fraction as insolubles.

The first extraction step is accomplished by making use of a higher solubility of the zinc rich mineral component in a cereal germ at pH of 5.0 or lower. The acids used for the pH adjustment can include mineral acids such as hydrochloric acid, sulfuric acid, phosphoric acid, etc., organic acids such as acetic acid, propionic acid, butyric acid, oxalic acid, malonic acid, succinic acid, fumaric acid, maleic acid, malic acid, lactic acid, tartaric acid, citric acid, etc.; and the so-called acid water producing at the anode during electrophoresis of water in the presence of an electrolyte. Edible acids such as lactic and citric acids are preferably used.

The step of recovering the precipitates in the second step is accomplished by making use of the dissolved behavior at the pH and temperature of the zinc rich mineral component in the extraction solution obtained by the first step. The pH adjustment in this step may be carried out by using a basic substance such as sodium hydroxide or potassium hydroxide. The pH adjustment and temperature control may be carried out separately or in combination with both of them.

The cereal germs which may be used in this invention include the germs of rice, wheat, barley, soybean, corn, milo and sunflower. The germs of wheat, rice and corn are preferably used because of easy availability of raw materials, a high content of zinc therein and palatability such as aromatic odor or taste as food additives. Especially, wheat germ is more preferable.

The mineral enriched foods of the present invention can be used in the form of powder, fluid and solid for any of those foods available at the present time. For example, the powder forms can include powdered enteral nutritions and powdered seasoning soups; the fluid forms can include liquid enteral nutritions, corn soups, pumpkin soups and soft drinks and the solid forms can include capsules or tablets, including confections such as drops or the so-called health foods.

The mineral enriching component of the invention is incorporated in a food in an amount so as to provide a zinc content of 0.2 to 150 mg/100 g in the food, preferably to provide a standard daily ingested amount of zinc of 1 to 15 mg.

The mineral enriching component of the invention can be uniformly blended into the powdered foods or can be homogeneously blended with the fluid or solid foods, and no deterioration or separation of said component was observed after a prolonged period of storage.

According to the present invention, it was unexpectedly found that when citric acid coexists with the fraction fractionated from an extract of a cereal germ and containing a zinc rich mineral component, zinc present in said fraction can be solubilized in water.

The zinc rich fraction usable in the present invention is clearly dissolved in water under an acidic condition of pH 5.0 or lower, but becomes insoluble in water at pH 6.0 or higher. However, it was surprisingly found that zinc in the fraction could be made water-soluble over all the pH ranges acceptable for foods, in the presence of citric acid in an amount of 10 or more moles, preferably 57 or more moles and most preferably 340 or more moles per mole of the zinc contained therein. In this case, citric acid acts as a solubilizer for zinc in a basic range. Thus, citric acid used as the solubilizer is clearly distinguishable from citric acid used for the pH adjustment in the production of the zinc rich fraction from an extract of a cereal germ. The pH adjustment itself may be carried out by using other acids than citric acid or by using a suitable base such as sodium carbonate or sodium bicarbonate in a basic range.

The foods of the present invention wherein zinc is made water-soluble under a neutral to alkaline condition can include foods wherein the food itself is in the state solubilized in water; foods in the form of a slurry or gruel wherein some of other components than zinc are present as insolubles; foods wherein one or several of other components than zinc are in the state of a gel; and foods in the form of a powder or solid wherein zinc becomes soluble in water upon addition of water.

The food materials of the present invention wherein zinc is made water-soluble under a neutral to alkaline condition can include food materials used for the preparation of the foods wherein the food itself is in the state solubilized in water; the foods in the form of a slurry or gruel wherein some of other components than zinc are present as insolubles and the foods wherein one or several of other components than zinc are in the state of a gel; food materials wherein the material becomes soluble in water in vivo when they are eaten; food materials in the form of a slurry or gruel with some of other components than zinc being present as insolubles in vivo; and the food materials wherein one or several of other components than zinc are in the state of a gel in vivo.

This invention is further illustrated by the following examples.

Preparation Examples 1 - 3 illustrate the preparation of the mineral enriching components from wheat germ, Examples 1 - 6 illustrate specific examples of the foods comprising those mineral enriching components, Examples 7 - 10 illustrate specific examples of the foods wherein zinc in the mineral enriching components was made water-soluble with citric acid and Reference Examples 1 and 2 illustrate specific examples wherein lactic acid was used in place of the citric acid in connection with the embodiments of Examples 7 - 10.

### Preparation Example 1

250 kg of defatted wheat germ (manufactured by Nisshin Flour Milling Co., Ltd.) were dispersed in 2000 kg of water with stirring and the resultant dispersion was adjusted to pH 4.0 with 20 kg of citric acid. To the dispersion was added 1250 g of amylase (Liquid Enzyme T manufactured by Hankyu Bio Industries Co., Ltd.), and the mixture was heated and kept at 85°C for 10 minutes and cooled to 50°C. Then, 1250 g of the amylase (Liquid Enzyme T) and 630 g of a protease (Protease M manufactured by Amano Pharmaceutical Co., Ltd.) were added and the resultant mixture was allowed to react at 50°C for 14 hours. Thereafter, the enzymes were deactivated by treating the mixture at 90°C for 10 minutes and then the mixture was cooled to 60°C. By this cooling to 60°C, zinc containing components in the mixture were solubilized. Subsequently, the mixture was centrifuged to remove insolubles. To the supernatant was added an activated carbon, the mixture was stirred and filtered using diatomaceous earth as a filter aid and the filtrate was adjusted to pH 8.0 with caustic soda to form a precipitate. The resulting precipitate was recovered by the centrifuge and freeze-dried to obtain 38.5 kg of a dry solid product. The product was white, substantially tasteless and odorless. By the analysis of the product, the zinc content was found to be 4500 ppm.

### Preparation Example 2

Defatted wheat germ was treated in the same manner as in Preparation Example 1, the filtrate thus obtained was heated to 90°C to form a precipitate and the precipitate was recovered through a filter while maintaining a temperature of 80°C. The precipitate was dried under reduced pressure to obtain 105 kg of a dry solid product. The product was white, substantially tasteless and odorless. By the analysis of the product, the zinc content was found to be 1500 ppm.

### Preparation Example 3

250 kg of defatted wheat germ (manufactured by Nisshin Flour Milling Co., Ltd.) were dispersed in 2000 kg of water with stirring and the resultant dispersion was adjusted to pH 4.0 with 20 kg of citric acid. To the dispersion was added 1250 g of amylase (Liquid Enzyme T manufactured by Hankyu Bio Industries Co., Ltd.), and the mixture was heated and kept at 85°C for 10 minutes and cooled to 50°C. Then, 1250 g of the amylase (Liquid Enzyme T) and 630 g of a protease (Protease M manufactured by Amano Pharmaceutical Co., Ltd.) were added and the resultant mixture was allowed to react at 50°C for 14 hours. Thereafter, the enzymes were deactivated by treating the mixture at 90°C for 10 minutes and then the mixture was cooled to 60°C. By this cooling to 60°C, zinc containing components in the mixture were solubilized. Subsequently, the mixture was centrifuged to remove insolubles. To the supernatant was added activated carbon, the mixture was stirred and filtered using diatomaceous earth as a filter aid and the filtrate was adjusted to pH 8.0 with caustic soda to form a precipitate. The resulting precipitate was recovered by a centrifuge and redissolved in 40 kg of anhydrous citric acid and 50 kg of water. The resultant solution was spray-dried to obtain 80 kg of dry powders. The product was white powders and the analysis thereof showed the zinc content of 3000 ppm and the citric acid content of 50% (56.7 in terms of a molar ratio of citric acid/zinc).

### Example 1

According to the formulation of a standard enteral nutrient, the following components were combined at the indicated proportion and then homogeneously blended using a mixer.

| | |
|---|---|
| Sodium casein | 4.0 g |
| Soybean oil | 2.8 g |
| Dextrin | 14.8 g |
| Vitamin Mix | 1.0 g |
| Mineral Mix | 1.0 g |
| Dry solid mineral enriching component from Preparation Example 1 | 0.1 g |

For reference, the Vitamin Mix and Mineral Mix as used herein had the following composition:

The Vitamin Mix comprised the following vitamins in the indicated amount per 1 gram of the excipient dextrin:

| | |
|---|---|
| Vitamin A | 100 IU |
| Vitamin B1 | 0.07 mg |
| Vitamin B2 | 0.09 mg |
| Vitamin B6 | 0.10 mg |
| Vitamin B12 | 0.07 µg |
| Vitamin C | 2.50 mg |
| Vitamin D | 5 IU |
| Vitamin E | 0.40 mg in terms of α-tocopherol equivalent |
| Niacin | 1.00 µg |
| Folic acid | 10 µg |
| Pantothenic acid | 0.20 mg |

The Mineral Mix comprised the following minerals in the indicated amount per 1 gram of the excipient dextrin:

| | |
|---|---|
| Sodium | 25 mg |
| Potassium | 100 mg |
| Calcium | 30 mg |
| Magnesium | 15 mg |
| Phosphorus | 30 mg |
| Iron | 0.7 mg |

The powdery enteral food thus obtained had a uniform appearance, a good powdery state and no changes in color and odor by blending the dry solid mineral enriching component from Preparation Example 1. Further, it maintained the good powdery state without any solidification even after stored under sealing over 12 months.

A powdery enteral food as a control was also prepared in the same manner as described above using the same formulation as identified above except that it did not contain the dry solid mineral enriching component from Preparation Example 1. This control food is referred to hereinafter as Comparative Example 1. The powdery enteral food of Comparative Example 1 maintained the good powdery state without any solidification even after being stored under sealing over 12 months.

### Example 2

23.6 g of the powdery enteral food of Example 1 and 23.7 g of the powdery enteral food of Comparative Example 1 were dissolved with stirring in a sufficient amount of water at 40°C to make up a total volume of 100 ml, respectively. Both powdery enteral foods were equally dissolved in a good state without solidifying, precipitating, floating or adhering onto the wall of the vessel.

Both the solutions were brought to 37°C and allowed to run down naturally through the ED tube with 4 Fr (an inner diameter of 0.7 mm) in height of 50 cm. Both were allowed to run down entirely within 1.5 hours without getting clogged in the tube.

Each of the solutions was allowed to stand in a plastic beaker at room temperature (25°C) for 2 hours. None of discoloration, solidification, precipitation, floatation and adhesion onto the wall of the beaker were observed in each case.

### Example 3

23.6 g of the powdery enteral food of Example 1 and 23.7 g of the powdery enteral food of Comparative Example 1 were dissolved with stirring in a sufficient amount of water at 40°C to make up a total volume of 100 ml, respectively. These solutions were emulsified by means of a homogenizer. Both of the solutions had the same taste and flavor as those of the solution obtained in Example 2. The physical properties of the emulsions thus prepared are as shown in the following Table 1.

**Table 1**

| | Comparative Example 1 | Example 3 |
|---|---|---|
| pH | 6.82 | 6.78 |
| Osmotic pressure (mOsm/L) | 278 | 282 |
| Brix | 22.7 | 23.1 |
| Viscosity (c.p.) | 11 | 11 |

200 ml of each of the resulting emulsions was filled into an aluminum pouch and sterilized at 120°C for 15 minutes. Then, the pouches were stored at 4°C until being opened after 3 months to examine the nature of the emulsions. None of discoloration, solidification, precipitation, floatation and adhesion onto the wall were observed in both the emulsions. Both the emulsions after being stored for 3 months were warmed to 37°C and observed for taste and flavor. Both of them maintained the taste and flavor as manufactured. Also, both of the emulsions after 3 months storage were determined for the content of various possible mineral components.

The results are shown in the following Table 2.

**Table 2**

| | Comparative Example 1 | Example 3 |
|---|---|---|
| Zinc | 0.2 mg/100 ml | 0.5 mg/100 ml |
| Manganese | 0.1 mg/100 ml | 0.3 mg/100 ml |

### Example 4

The dry solid mineral enriching component (1 g) obtained in Preparation Example 2 was dissolved in each of the aqueous solutions as listed in the following Table 3. The component was dissolved in any of the aqueous solutions, while solidification, precipitation, floatation and adhesion onto the wall did not occur.

**Table 3**

| Properties observed when 1 g of the dry solid mineral enriching component was dissolved in 100 ml of the indicated aqueous solution | | |
|---|---|---|
| Type of aqueous solution | pH | Properties of resulting solution |
| 0.1N citric acid aq.soln. | 2.1 | Pale yellow, clear |
| 0.1N citric acid/Na citrate aq.soln. | 2.5 | Pale yellow, clear |
| 0.1N citric acid/Na citrate aq.soln. | 3.0 | Pale yellow, clear |
| 0.1N citric acid/Na citrate aq.soln. | 3.5 | Pale yellow, clear |
| 0.1N citric acid/Na citrate aq.soln. | 4.0 | Pale yellow, clear |
| 0.1N citric acid/Na citrate aq.soln. | 4.5 | Pale yellow, clear |
| 0.05N acetic acid/Na acetate buffer | 4.5 | Pale yellow, clear |
| 0.05N acetic acid/Na acetate buffer | 5.0 | Pale yellow, clear |
| 0.05N acetic acid/Na acetate buffer | 5.5 | Pale yellow, slightly turbid |
| 0.05N acetic acid/Na acetate buffer | 6.0 | Pale yellow, somewhat turbid |
| 0.05N acetic acid/Na acetate buffer | 6.5 | Pale yellow, turbid |
| 0.05N acetic acid/Na acetate buffer | 7.0 | Pale yellow, turbid |

The pH values of various drinks are as shown in the following Table 4 by reference to "Principles of Anatomy and Physiology", 5th Ed., Harper & Row(NY), 1989, p.36. Thus, it is apparent that the dry solid mineral enriching component of Example 4 can be completely dissolved to give a clear solution at the pH value of the drinks usually taken.

**Table 4**

| Type of drinks | pH |
|---|---|
| Lemon juice | 2.2 - 2.4 |
| Grapefruit juice | 3.0 |
| Beer | 3.0 |
| Wine | 3.0 |
| Cider (Apple sparkling wine) | 2.8 - 3.3 |
| Pineapple juice | 3.5 |
| Orange juice | 3.5 |
| Tomato juice | 4.2 |
| Coffee | 5.0 |

Then, a soft drink with the composition shown in the following Table 5 was prepared using the dry solid mineral enriching component of Example 4.

**Table 5**

| Composition of soft drink (per 100 ml) | |
|---|---|
| Sucrose | 5.0 g |
| Mineral enriching component | 2.0 g |
| Citric acid | 1.0 g |
| Lemon fruit juice | 1.0 g |

The soft drink thus obtained was determined at 4°C for the properties, taste and flavor thereof. It was found that the drink was pale yellow and clear, and had no unpleasant taste and odor. The zinc content of this drink was found 3 mg/100 ml.

### Example 5

The dry solid mineral enriching component (500 g) obtained in Preparation Example 2 was admixed as indicated in the following Table 6 and then compressed to tablets, each weighing 330 mg, using a tablet machine.

**Table 6**

| Composition of tablets | |
|---|---|
| Component | Proportion |
| Mineral enriching component | 500 g |
| Crystalline cellulose | 236 g |
| Anhydrous citric acid | 80 g |
| Sucrose aliphatic acid ester | 9 g |
| Total | 825 g |

The tablets were determined for the properties, taste and mineral content. Neither unpleasant taste nor odor was observed. The mineral contents were found to be 0.30 mg of zinc and 0.24 mg of manganese per tablet on the average. The disintegration time of the tablet was within 20 minutes.

From the foregoing, it was identified that the tablets were rich in minerals.

### Example 6

The dry solid mineral enriching component (500 g) obtained in Preparation Example 2 was admixed as indicated in the following Table 7 and then formed into soft capsules, each weighing 360 mg, using a soft capsule filling machine.

**Table 7**

| Composition of soft capsules | |
|---|---|
| Component | Proportion |
| Mineral enriching component | 500 g |
| Wheat germ oil | 350 g |
| Beeswax | 50 g |
| Total | 900 g |

The capsules thus prepared were determined for a mineral content, with the result of 0.30 mg zinc and 0.24 mg manganese per tablet on the average. The disintegration time of the soft capsules was within 20 minutes.

From the foregoing, it was identified that the soft capsules were rich in minerals.

### Example 7

The wheat germ extract obtained in Preparation Example 1 was used as a water soluble food material containing zinc. 0.33 g of the germ extract having a zinc content of 4,500 ppm was dissolved in a 5 - 105 mM aqueous solution of citric acid to make up a total of 100 ml. The resulting solution had a zinc concentration of 15 ppm (0.23 mM) and it was then adjusted to pH 8 with the addition of a 1N aqueous solution of sodium hydroxide.

A 10 ml portion of the resulting solution was placed into a centrifuging tube and centrifuged at 2,000 G for 10 minutes. After removing the supernatant, the precipitate was dissolved in dil. hydrochloric acid to make up a total of 200 ml. The zinc concentration of the resulting solution was determined by atomic absorption spectrometry. A rate of the zinc recovered as a precipitate was calculated from the zinc concentration as determined.

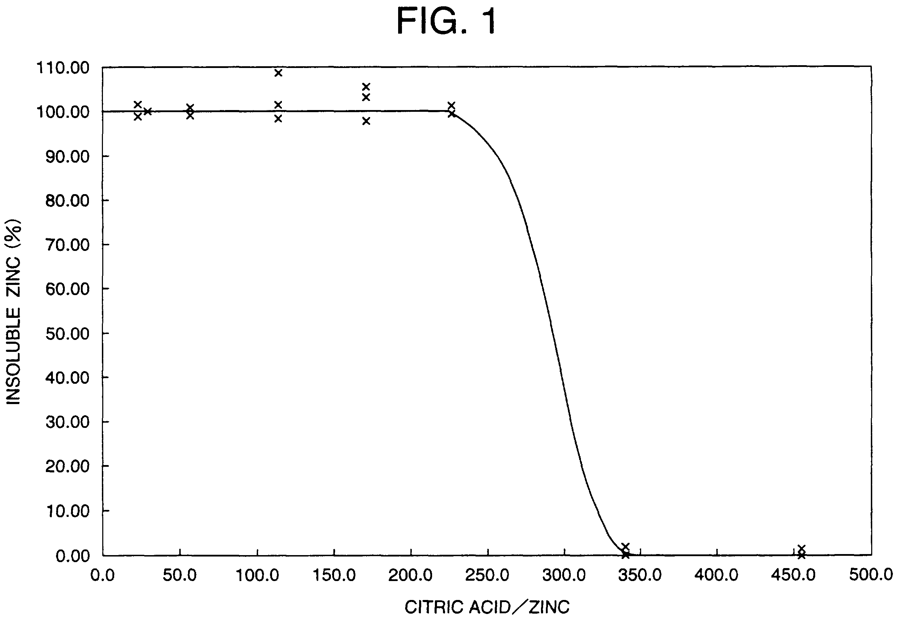

The results are shown in Fig. 1. Fig. 1 shows that, when the zinc concentration is 15 ppm, zinc is insolubilized to form a precipitate at a citric acid concentration up to 52 mM (a molar ratio of citric acid / zinc = 227.0) by adjusting the pH of the solution to 8, while zinc is not precipitated and remains soluble at a citric acid concentration of 78 mM (a molar ratio of citric acid / zinc = 340.5) or higher even by adjusting pH of the solution to 8.

### Example 8

The solution obtained in Example 7 having a zinc concentration of 15 ppm and a citric acid concentration of 52 mM (a molar ratio of citric acid / zinc = 227.0) was studied for the relationship between pH of the solution and solubility of zinc.

The solution was adjusted to pH 7 - 8.5 with the addition of a 1N aqueous solution of sodium hydroxide. A 10 ml portion of the resulting solution was placed into a centrifuging tube and centrifuged at 2,000 G for 10 minutes. After removing the supernatant, the precipitate was dissolved in dil. hydrochloric acid to make up a total of 200 ml. The zinc concentration of the resulting solution was determined by atomic absorption spectrometry. A rate of the zinc recovered as a precipitate was calculated from the zinc concentration as determined.

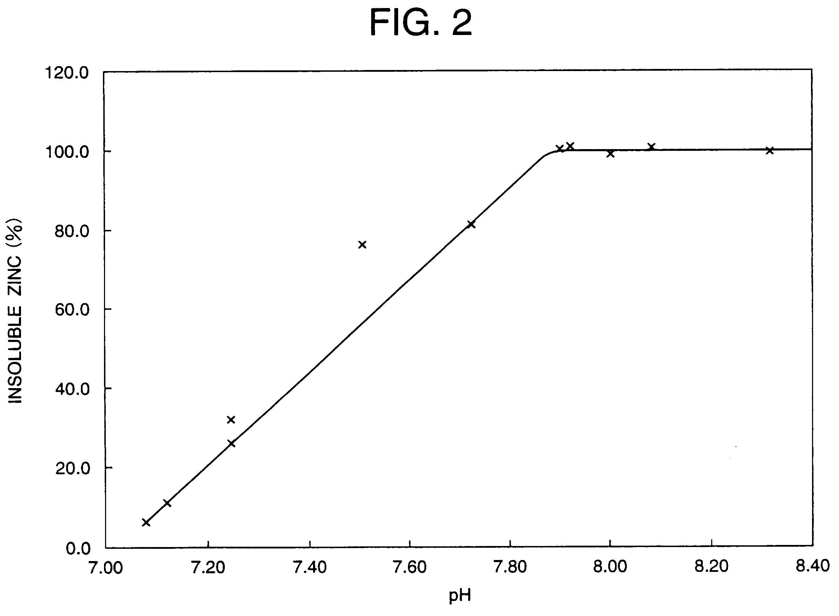

The results are shown in Fig. 2. Fig. 2 shows that, when the zinc concentration is 15 ppm and the molar ratio of citric acid / zinc is 227.0, zinc is insolubilized within the range of pH 7 - 8 proportionally to the pH value of the solution.

### Reference Example 1

The wheat germ extract obtained in Preparation Example 1 was used as a water soluble food material containing zinc. 0.33 g of the germ extract having a zinc content of 4,500 ppm was dissolved in a 13 - 220 mM aqueous solution of lactic acid to make up a total of 100 ml. The resulting solution had a zinc concentration of 15 ppm (0.23 mM). The solution became cloudy when adjusted to pH 8 with the addition of a 1N aqueous solution of sodium hydroxide.

A 10 ml portion of the resulting solution was placed into a centrifuging tube and centrifuged at 2,000 G for 10 minutes. After removing the supernatant, the precipitate was dissolved in dil. hydrochloric acid to make up a total of 200 ml. The zinc concentration of the resulting solution was determined by atomic absorption spectrometry.

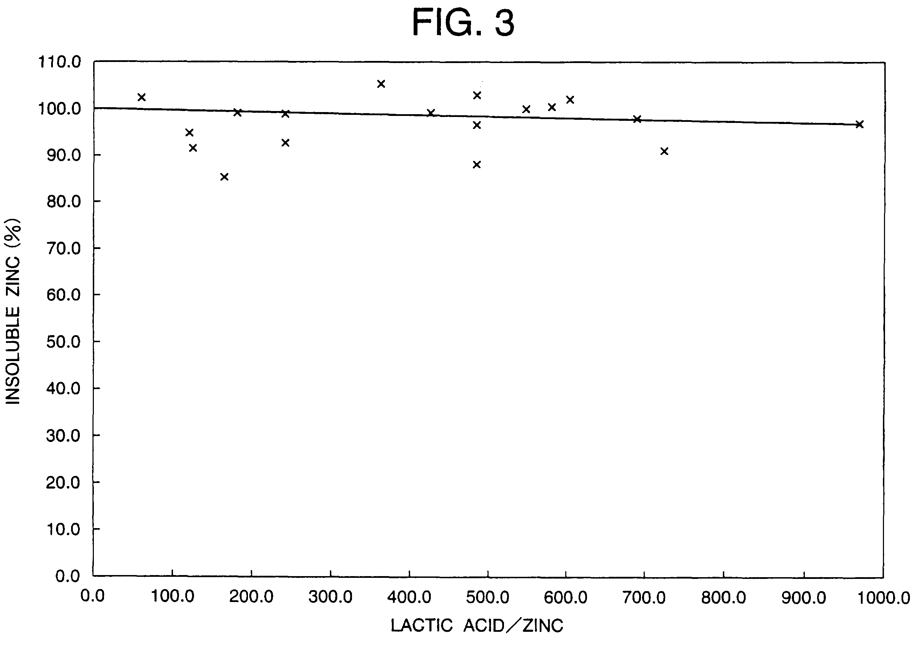

The results are shown in Fig. 3. Fig. 3 shows that, when the zinc concentration is 15 ppm, zinc is insolubilized even in the presence of lactic acid (up to approximately 1,000 times molar ratio of lactic acid / zinc) by adjusting the pH of the solution to 8.

### Reference Example 2

The wheat germ extract obtained in Preparation Example 1 was used as a water soluble food material containing zinc and dissolved in a 0 - 50 mM aqueous solution of lactic acid to give a zinc concentration of 6 ppm (0.09 mM). The resulting solution was adjusted to pH 8 with the addition of a 1N aqueous solution of sodium hydroxide. A 10 ml portion of the resulting solution was placed into a centrifuging tube and centrifuged at 2,000 G for 10 minutes. After removing the supernatant, the precipitate was dissolved in dil. hydrochloric acid to make up a total of 10 ml. The zinc concentration of the resulting solution was determined by atomic absorption spectrometry. A rate of the zinc recovered as a precipitate was calculated from the zinc concentration as determined.

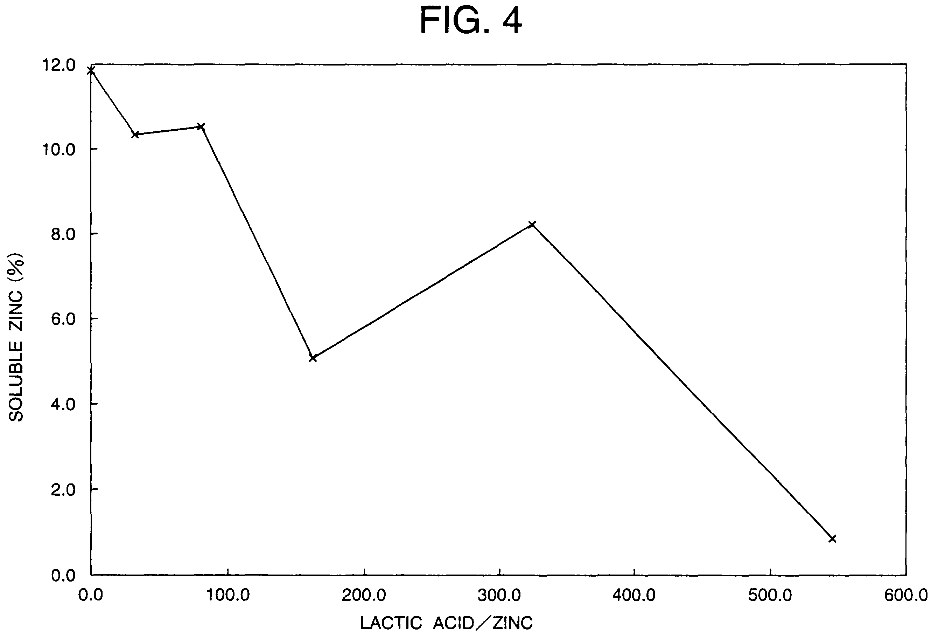

The results are shown in Fig. 4. Fig. 4 shows that zinc becomes insoluble even in the presence of lactic acid up to 50 mM (a molar ratio of lactic acid / zinc = 544.8) by making the solution alkaline (pH 9).

### Example 9

The wheat germ extract obtained in Preparation Example 1 was used as a water soluble food material containing zinc and dissolved in a 0 - 10 mM aqueous solution of citric acid to give a zinc concentration of 6 ppm (0.09 mM). The resulting solution was adjusted to pH 9 with a 1N aqueous solution of sodium hydroxide.

A 10 ml portion of the resulting solution was placed into a centrifuging tube and centrifuged at 2,000 G for 10 minutes. After removing the supernatant, the precipitate was dissolved in dil. hydrochloric acid to make up a total of 10 ml. The zinc concentration of the resulting solution was determined by atomic absorption spectrometry. A rate of the zinc recovered as a precipitate was calculated from the zinc concentration as determined.

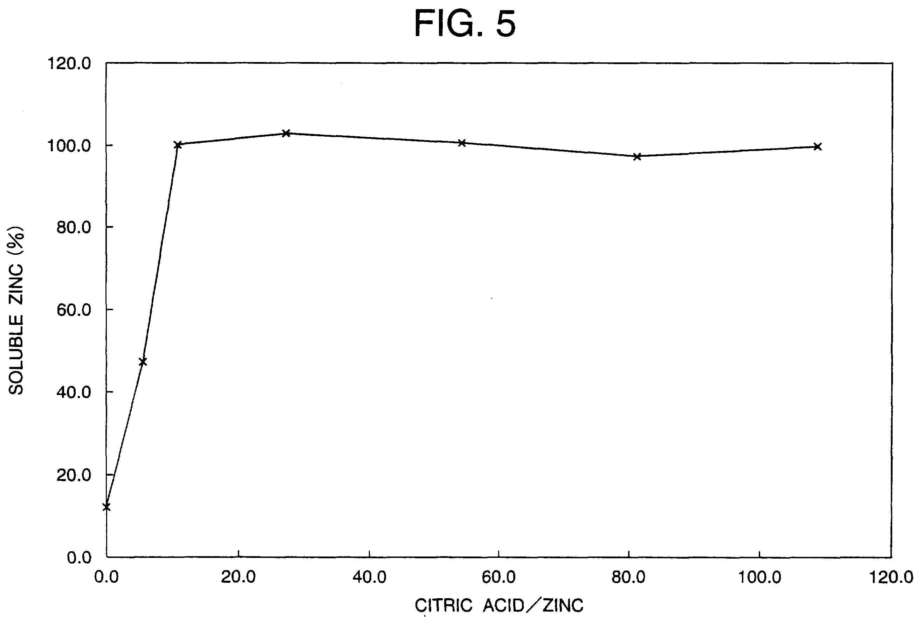

The results are shown in Fig. 5. Fig. 5 shows that, when the zinc concentration is 6 ppm, zinc is solubilized even under alkaline condition (pH 9) if citric acid is at a concentration of 1 mM (a molar ratio of citric acid / zinc = 10.9) or more.

### Example 10

The wheat germ extract obtained in Preparation Example 3 was used as a water soluble food material containing zinc and a zinc concentration was brought to 6 ppm (0.09 mM). A citric acid concentration at this point was 5.2 mM. The solution was adjusted to pH 3 - 11.5 with the addition of a 1N aqueous solution of sodium hydroxide. A 10 ml portion of the resulting solution was placed into a centrifuging tube and centrifuged at 2,000 G for 10 minutes. After removing the supernatant, the precipitate was dissolved in dil. hydrochloric acid to make up a total of 10 ml. The zinc concentration of the resulting solution was determined by atomic absorption spectrometry. A rate of the zinc recovered as a precipitate was calculated from the zinc concentration as determined.

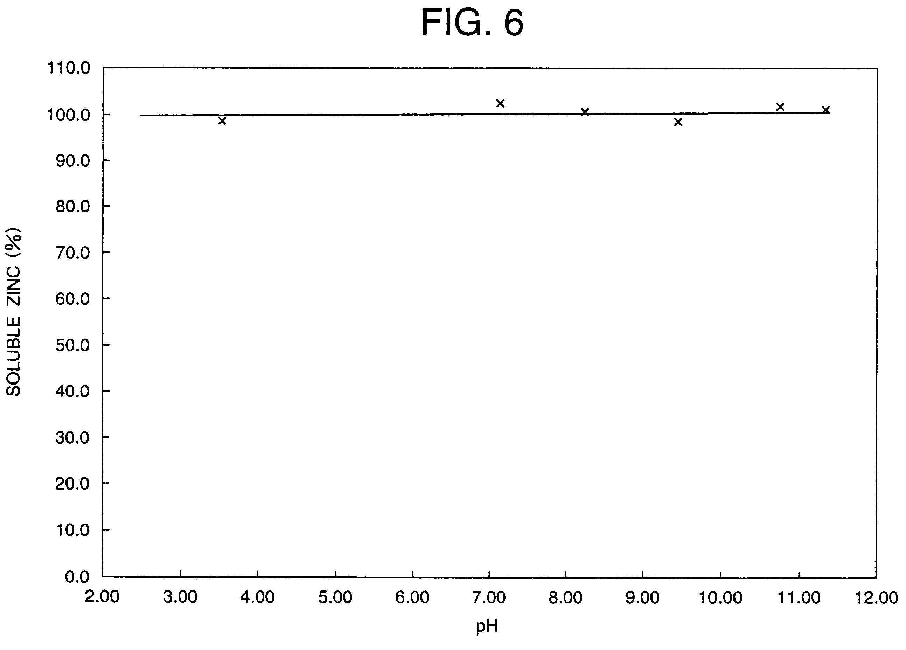

The results are shown in Fig. 6. Fig. 6 shows that the wheat germ extract obtained in Preparation Example 3, when formed to an aqueous solution with the zinc concentration of 6 ppm, could not insolubilize zinc even under an alkaline condition.

## Claims

1. A food which comprises as a mineral enriching component a fraction containing a zinc rich mineral component which is fractionated from an extract of a cereal germ.

2. The food of claim 1 wherein the mineral component further contains manganese and others.

3. The food of claim 1 wherein the fraction is obtained by the steps of:
extracting a cereal germ with water at a temperature of 70°C or lower under an acidic condition of pH 5.0 or lower; and
adjusting the pH of the resulting extract to 6.0 or higher or heating the resulting extract to a temperature of 70 to 100°C to precipitate and recover said fraction as insolubles.

4. The food of claim 1 wherein the cereal germs include the germs of rice, wheat, barley, soybean, corn, milo and sunflower.

5. The food of claim 1 which is in the form of powder, fluid or solid.

6. A food comprising as a mineral enriching component a fraction containing a zinc rich mineral component which is fractionated from an extract of a cereal germ, wherein zinc in the fraction is made water-soluble under a neutral to alkaline condition, with citric acid added in 10 or more moles per mole of zinc.

7. The food of claim 6 wherein the mineral component further contains manganese and others.

8. The food of claim 6 wherein the fraction is obtained by the steps of:
extracting a cereal germ with water at a temperature of 70°C or lower under an acidic condition of pH 5.0 or lower; and
adjusting the pH of the resulting extract to 6.0 or higher or heating the resulting extract to a temperature of 70 to 100°C to precipitate and recover said fraction as insolubles.

9. The food of claim 6 wherein the cereal germs include the germs of rice, wheat, barley, soybean, corn, milo and sunflower.

10. The food of claim 6, which is in the form of powder, fluid or solid.

11. A food material comprising as a mineral enriching component a fraction containing a zinc rich mineral component which is fractionated from an extract of a cereal germ, wherein zinc in the fraction is made water-soluble under a neutral to alkaline condition, with citric acid added in 10 or more moles per mole of zinc.

12. The food material of claim 11 wherein the mineral component further contains manganese and others.

13. The food material of claim 11 wherein the fraction is obtained by the steps of:
extracting a cereal germ with water at a temperature of 70°C or lower under an acidic condition of pH 5.0 or lower; and
adjusting the pH of the resulting extract to 6.0 or higher or heating the resulting extract to a temperature of 70 to 100°C to precipitate and recover said fraction as insolubles.

14. The food material of claim 11 wherein the cereal germs include the germs of rice, wheat, barley, soybean, corn, milo and sunflower.
